# EUROPEAN PATENT APPLICATION

(11) **EP 4 289 584 A1**
(43) Date of publication of application: **13.12.2023**
(21) Application number: 22749712.0
(22) Date of filing: 01.02.2022
(51) Int. Cl.: B29B 9/06, C08J 3/12, C08J 9/12

(54) **ETHYLENE-VINYL ALCOHOL COPOLYMER POROUS PELLETS AND MANUFACTURING METHOD FOR SAME**

(30) Priority: 02.02.2021 JP 2021014689
(71) Applicant: Kuraray Co., Ltd., Kurashiki-shi, Okayama 710-0801 (JP)
(72) Inventor: OSHITA, Mizuko, Kurashiki-shi, Okayama 713-8550 (JP)
(74) Representative: Müller-Boré & Partner Patentanwälte PartG mbB
(86) International application number: PCT/JP2022/003888
(87) International publication number: WO 2022/168840

(57) **Abstract**

Provided are: porous pellets of an EVOH; and a method for producing the same, which can be accompanied by not only washing out of saponification residues in a shorter period of time, but also inhibiting conglutination of the pellets with one another during washing at a high temperature. Porous pellets of an ethylene-vinyl alcohol copolymer having pores, wherein in the porous pellets, a proportion (V2/V1 × 100) of a total value (V2) of pore volumes of pores having pore diameters of 0.5 to 100 µm with respect to a total value (V1) of pore volumes of pores having pore diameters of 0.005 to 100 µm is 25 to 40% by volume, and a pore surface area of pores having pore diameters of 0.005 to 100 µm is 25 to 45 m²/g.

## Description

### [TECHNICAL FIELD]

The present invention relates to porous pellets of an ethylene-vinyl alcohol copolymer, and a method for producing the same.

### [BACKGROUND ART]

Ethylene-vinyl alcohol copolymers (hereinafter, may be also referred to as "EVOH(s)") are polymeric materials that are superior in oxygen barrier properties, aroma retention, oil resistance, antistatic properties, mechanical strength, and the like, and have been extensively used after being formed into films, sheets, containers, or the like. As a method for producing an EVOH, a method has been typically employed in which an ethylene-vinyl ester copolymer provided by copolymerizing ethylene with a vinyl ester such as vinyl acetate is saponified in an organic solvent containing an alcohol, in the presence of a saponification catalyst.

Known posttreatment methods for an alcoholic solution of the EVOH obtained by saponification may be exemplified by: a method including preparing an alcohol/water mixed solution of the EVOH and extruding the same into a coagulation bath to permit precipitation to have a strand shape, followed by cutting to obtain water-containing EVOH pellets having a microporous internal structure in which pores are evenly distributed (Patent Document 1); a method including introducing the alcoholic solution of the EVOH into an apparatus to be brought into contact with water in the apparatus and substituting the alcohol in the solution with water, followed by cutting a water-containing EVOH composition discharged from the apparatus, thereby giving water-containing EVOH pellets (Patent Document 2); and the like.

### [PRIOR ART DOCUMENTS]

### [PATENT DOCUMENTS]

Patent Document 1: Japanese Unexamined Patent Application, Publication No. H11-293077
Patent Document 2: Japanese Unexamined Patent Application, Publication No. 2002-121290

### [SUMMARY OF THE INVENTION]

### [Problems to be Solved by the Invention]

However, in some cases, because of pore diameters being evenly controlled, the water-containing EVOH pellets disclosed in Patent Document 1 may necessitate substantial time period(s) for washing and/or drying of saponification residues, and/or may cause conglutination of the pellets during washing under high temperature conditions. In addition, with respect to the water-containing EVOH pellets disclosed in Patent Document 2, obtaining porous pellets is enabled; however, due to pore diameters not being controlled, there may be cases in which substantial time period(s) for washing and/or drying of saponification residues may be necessary, and/or conglutination of the pellets with one another may occur during washing under high temperature conditions.

The present invention was made for solving the aforementioned problems, and an object of the invention is to provide: porous pellets of an EVOH; and a method for producing the same, which can be accompanied by not only washing out of saponification residues in a shorter period of time, but also inhibiting conglutination of the pellets with one another during washing at a high temperature.

### [Means for Solving the Problems]

According to the present invention, the object of the invention is accomplished by providing any one of the following:
(1) Porous pellets of an ethylene-vinyl alcohol copolymer having pores, wherein in the porous pellets, a proportion (V2/V1 × 100) of a total value (V2) of pore volumes of pores having pore diameters of 0.5 to 100 µm with respect to a total value (V1) of pore volumes of pores having pore diameters of 0.005 to 100 µm is 25 to 40% by volume, and a pore surface area of pores having pore diameters of 0.005 to 100 µm is 25 to 45 m²/g;
(2) The porous pellets of an ethylene-vinyl alcohol copolymer according to (1), wherein a median diameter of pores having pore diameters of 0.005 to 100 µm is 0.05 to 0.13 µm;
(3) The porous pellets of an ethylene-vinyl alcohol copolymer according to (1) or (2), wherein an average particle diameter is 2.5 to 8 mm;
(4) The porous pellets of an ethylene-vinyl alcohol copolymer according to any one of (1) to (3), further comprising water;
(5) The porous pellets of an ethylene-vinyl alcohol copolymer according to (4), wherein a moisture content is 5 to 50% by mass;
(6) A method for producing porous pellets of an ethylene-vinyl alcohol copolymer, the method including:
   a first step of introducing into an extruder and melt kneading a water-containing ethylene-vinyl alcohol copolymer having a moisture content W1 of 10 to 90% by mass; and
   a second step of cutting the water-containing ethylene-vinyl alcohol copolymer discharged from the extruder to obtain the porous pellets of the ethylene-vinyl alcohol copolymer containing water, wherein
   a temperature of the water-containing ethylene-vinyl alcohol copolymer discharged from the extruder is 80 to 100 °C,
   a proportion (V2/V1 × 100) of a total value (V2) of pore volumes of pores having pore diameters of 0.5 to 100 µm with respect to a total value (V1) of pore volumes of pores having pore diameters of 0.005 to 100 µm, in the porous pellets of the ethylene-vinyl alcohol copolymer, is 25 to 40% by volume, and
   a pore surface area of the porous pellets of the ethylene-vinyl alcohol copolymer is 25 to 45 m²/g;
(7) The method for producing porous pellets of an ethylene-vinyl alcohol copolymer according to (6), wherein in the second step, the water-containing ethylene-vinyl alcohol copolymer discharged from the extruder is cut in a molten state.

### [Effects of the Invention]

The method for production of the present invention enables providing: porous pellets of an EVOH; and a method for producing the same, which can be accompanied by not only washing out of saponification residues in a shorter period of time, but also inhibiting conglutination of the pellets with one another during washing at a high temperature.

### [BRIEF DESCRIPTION OF THE DRAWINGS]

FIG. 1 shows a view illustrating a cylinder structure and a screw structure of a twin-screw extruder in Examples 1 to 10 and Comparative Example 1.
FIG. 2 shows a view illustrating a structure of a hot cutter in Examples 1 to 10 and

### Comparative Example 1.

### [DESCRIPTION OF EMBODIMENTS]

In the present specification, the term "to" for expressing a numerical value range indicates a range which includes each lower limit value and upper limit value. For example, "A to B" indicates "A or more and B or fewer/less".

### Porous Pellets of EVOH

The porous pellets of an EVOH of the present invention has pores, and a proportion (V2/V1 × 100) (hereinafter, may be abbreviated to "pore volume proportion (V2/V1)") of a total value (V2) (hereinafter, may be abbreviated to "pore volume (V2)") of pore volumes of pores having pore diameters of 0.5 to 100 µm with respect to a total value (V1) (hereinafter, may be abbreviated to "pore volume (V1)") of pore volumes of pores having pore diameters of 0.005 to 100 µm is 25 to 40% by volume, and a pore surface area of pores having pore diameters of 0.005 to 100 µm is 25 to 45 m²/g. Herein, the pore volume(s), the pore surface area, and a median diameter of pores described later can be calculated from a distribution of the pores, and such a pore distribution means a result of a measurement by a mercury intrusion technique and more specifically, the pore distribution can be determined in accordance with a method described in EXAMPLES. Furthermore, the pore volume proportion (V2/V1) being 25 to 40% by volume means that the pore distribution has a certain level of scattering. Due to the porous pellets of an EVOH of the present invention, in particular, having a specific pore volume proportion, and having a specific pore surface area, washing efficiency of saponification residues may be improved, whereby conglutination of the pellets with one another during washing at a high temperature tends to be inhibited. In addition, due to having the pore volume proportion (V2/V1) and the pore surface area, each being specific, drying efficiency can be enhanced and deterioration by heating of pellets of the EVOH to be obtained can be inhibited. In light of allowing for maximally achieving the aforementioned effects, the porous pellets of an EVOH of the present invention are preferably water-containing porous pellets of EVOH containing water.

The total value (V1) of pore volumes of pores having pore diameters of 0.005 to 100 µm in the porous pellets of an EVOH of the present invention is preferably 0.2 ml/g or more, more preferably 0.22 ml/g or more, and still more preferably 0.25 ml/g or more. Furthermore, the pore volume (V1) is preferably 0.5 ml/g or less, more preferably 0.4 ml/g or less, and still more preferably 0.35 ml/g or less. When the pore volume (V1) falls within the above range, conglutination of the pellets with one another during washing at a high temperature can be inhibited, and the drying efficiency tends to be superior.

In the porous pellets of an EVOH of the present invention, the pore volume proportion (V2/V1) is 25% by volume or more, preferably 28% by volume or more, still more preferably 30% by volume or more, even more preferably 32% by volume or more, and yet more preferably 33.5% by volume or more. When the pore volume proportion (V2/V1) is less than 25% by volume, the washing efficiency of saponification residues may be impaired and drying may take a long time period, whereby production efficiency tends to be impaired. In addition, the pore volume proportion (V2/V1) is 40% by volume or less, and preferably 38.5% by volume or less. When the pore volume proportion (V2/V1) is more than 40% by volume, the pellets during washing at a high temperature tend to be likely to conglutinate with one another. The pore volume proportion (V2/V1) can be adjusted by: a cylinder temperature of the extruder used in the first step; a temperature of the water-containing EVOH introduced into the extruder; a percentage content of an alcohol having a boiling point of 100 °C or less, and an ethylene unit content in the water-containing EVOH introduced into the extruder; and a temperature condition of the water-containing EVOH discharged from the extruder, each in a method for production described later.

The pore surface area of pores having pore diameters of 0.005 to 100 µm in the porous pellets of an EVOH of the present invention is 25 m²/g or more, preferably 30 m²/g or more, and more preferably 32.0 m²/g or more. When the pore surface area in the porous pellets of an EVOH is less than 25 m²/g, the washing efficiency of saponification residues tends to be lowered. Further, the pore surface area in the porous pellets of an EVOH is 45 m²/g or less, preferably 41 m²/g or less, more preferably 39 m²/g or less, and still more preferably 37 m²/g or less. When the pore surface area of the porous pellets of an EVOH is more than 45 m²/g, the pellets during washing at a high temperature tend to be likely to conglutinate with one another. The pore surface area can be adjusted by conditions in the method for production described later such as: a cylinder temperature of the extruder used in the first step; a temperature of the water-containing EVOH introduced into the extruder; the moisture content W1 in the water-containing EVOH introduced into the extruder; a percentage content of an alcohol having a boiling point of 100 °C or less in the water-containing EVOH introduced into the extruder; a temperature of and an ethylene unit content in the water-containing EVOH discharged from the extruder; and the moisture content W2 in the porous pellets of the EVOH discharged from the extruder and then cut.

The median diameter of pores having pore diameters of 0.005 to 100 µm in the porous pellets of an EVOH of the present invention is, in light of the washing efficiency of saponification residues, and the drying efficiency, preferably 0.05 µm or more, more preferably 0.06 µm or more, and still more preferably 0.07 µm or more. Furthermore, the median diameter may be, for example, 0.3 µm or less or 0.2 µm or less, and in light of inhibition of conglutination of the pellets with one another during washing at a high temperature, is preferably 0.13 µm or less, and more preferably 0.12 µm or less.

The shape of the porous pellets of an EVOH of the present invention is preferably spherical (or nearly spherical). An average particle diameter of the porous pellets of an EVOH of the present invention is, in light of inhibition of conglutination of the pellets with one another during washing at a high temperature, preferably 2.5 mm or more and 8 mm or less, and more preferably 2.8 mm or more and 5 mm or less. The average particle diameter of the porous pellets of an EVOH can be measured by a method described in EXAMPLES.

The EVOH for constituting the porous pellets of an EVOH of the present invention can be obtained by a well-known procedure, and may be obtained by saponifying an ethylene-vinyl ester copolymer.

An ethylene unit content of the EVOH which constitutes the porous pellets of an EVOH of the present invention is, in light of melt formability, preferably 20 mol% or more, more preferably 24 mol% or more, and still more preferably 26 mol% or more. On the other hand, in light of gas barrier properties, the ethylene unit content is preferably 60 mol% or less, more preferably 48 mol% or less, and still more preferably 46 mol% or less.

A degree of saponification of the EVOH which constitutes the porous pellets of an EVOH of the present invention is not particularly limited, and is, in light of maintaining gas barrier properties and making long-run workability favorable, preferably 95 mol% or more, more preferably 98 mol% or more, and still more preferably 99 mol% or more. On the other hand, the degree of saponification of the EVOH may be 100 mol% or less, or may be 99.99 mol% or less. The degree of saponification can be determined by ¹H-NMR.

The EVOH which constitutes the porous pellets of an EVOH of the present invention may have unit(s) derived from other monomer(s) aside from: ethylene; a vinyl ester; and a saponification product thereof. In the case in which the EVOH has the unit(s) derived from the other monomer(s), a content of the unit(s) derived from the other monomer(s) with respect to structural units of the EVOH is preferably 30 mol% or less, more preferably 20 mol% or less, still more preferably 10 mol% or less, and particularly preferably 5 mol% or less. Furthermore, in the case in which the EVOH has the unit(s) derived from the other monomer(s), a lower limit value thereof may be 0.05 mol%, or may be 0.10 mol%. Examples of the other monomer include: alkenes such as propylene, butylene, pentene, and hexene; alkenes having an ester group, such as 3-acyloxy-1-propene, 3-acyloxy-1-butene, 4-acyloxy-1-butene, 3,4-diacyloxy-1-butene, 3-acyloxy-4-methyl-1-butene, 4-acyloxy-2-methyl-1-butene, 4-acyloxy-3-methyl-1-butene, 3,4-diacyloxy-2-methyl-1-butene, 4-acyloxy-1-pentene, 5-acyloxy-1-pentene, 4,5-diacyloxy-1-pentene, 4-acyloxy-1-hexene, 5-acyloxy-1-hexene, 6-acyloxy-1-hexene, 5,6-diacyloxy-1-hexene, and 1,3-diacetoxy-2-methylenepropane, or saponification products thereof; unsaturated acids such as acrylic acid, methacrylic acid, crotonic acid, and itaconic acid, or anhydrides, salts, or monoalkyl or dialkyl esters, etc., thereof; nitriles such as acrylonitrile and methacrylonitrile; amides such as acrylamide and methacrylamide; olefin sulfonic acids such as vinylsulfonic acid, allylsulfonic acid, and methallylsulfonic acid, or salts thereof; vinylsilane compounds such as vinyltrimethoxysilane, vinyltriethoxysilane, vinyltri(β-methoxy-ethoxy)silane, and γ-methacryloxypropylmethoxysilane; alkyl vinyl ethers; vinyl ketones; N-vinylpyrrolidone; vinyl chloride; vinylidene chloride; and the like. The EVOH (A) may be postmodified by a procedure such as urethanization, acetalization, cyanoethylation, or oxyalkylenation.

The porous pellets of an EVOH of the present invention are preferably water-containing porous pellets of an EVOH containing water. A moisture content of the water-containing porous pellets of an EVOH is preferably 5% by mass or more, more preferably 10% by mass or more, and still more preferably 20% by mass or more. Furthermore, the moisture content of the water-containing porous pellets of an EVOH is preferably 50% by mass or less, and more preferably 45% by mass or less. When the moisture content of the water-containing porous pellets of an EVOH falls within the above range, the pore surface area and the pore volume proportion (V2/V1) tend to be readily adjusted to fall under the scope of the present invention. In addition, when the moisture content of the water-containing porous pellets of an EVOH falls within the above range, minute pores tend to be stably present.

The porous pellets of an EVOH of the present invention preferably contain at least one selected from the group consisting of a carboxylic acid, a boron compound, a phosphoric acid compound, an alkali metal salt, and an alkaline earth metal salt, in order to improve quality in terms of, e.g., thermal stability. An addition procedure is not particularly limited, and a well-known procedure can be adopted. For example, a procedure including immersing porous pellets of an EVOH in an aqueous solution containing at least one selected from the group consisting of a carboxylic acid, a boron compound, a phosphoric acid compound, an alkali metal salt, and an alkaline earth metal salt to permit adsorption of the same, and a procedure of blending at least one additive selected from a carboxylic acid, a boron compound, a phosphoric acid compound, an alkali metal salt, and an alkaline earth metal salt in an extruder other than the extruder of the present invention to permit melt kneading may be exemplified.

The carboxylic acid is exemplified by oxalic acid, succinic acid, benzoic acid, citric acid, acetic acid, lactic acid, propionic acid, and the like, and in terms of cost, superior availability, and the like, acetic acid, lactic acid, or propionic acid is preferably used. A content of the carboxylic acid in the porous pellets of an EVOH of the present invention is, in light of hue and adhesiveness to other layer(s), preferably 10 to 5,000 ppm. The lower limit of the content of the carboxylic acid is preferably 30 ppm, and more preferably 50 ppm. Furthermore, the upper limit of the content of the carboxylic acid is preferably 1,000 ppm, and more preferably 500 ppm.

The phosphoric acid compound is exemplified by various types of acids such as phosphoric acid and phosphorous acid, as well as salts thereof, and the like. As a phosphoric acid salt, the phosphoric acid compound may be contained in any form of a primary phosphate, a secondary phosphate, or a tertiary phosphate, and a cation species of the phosphate is not particularly limited and an alkali metal salt or an alkaline earth metal salt is preferred. Of these, addition of the phosphoric acid compound in the form of sodium dihydrogen phosphate, potassium dihydrogen phosphate, disodium hydrogen phosphate, or dipotassium hydrogen phosphate is preferred. A content of the phosphoric acid compound in the porous pellets of an EVOH of the present invention is, in light of prevention of coloring of molded articles and generation of a gel and/or aggregate, preferably 1 to 1,000 ppm in terms of phosphate radical equivalent.

The boron compound is exemplified by boric acids, boric acid esters, boric acid salts, boron hydrides, and the like, but not limited thereto. Specific examples of the boric acids include orthoboric acid, metaboric acid, tetraboric acid, and the like. Specific examples of the boric acid esters include triethyl borate, trimethyl borate, and the like. Specific examples of the boric acid salts include alkali metal salts, alkaline earth metal salts of the aforementioned various types of boric acids, borax, and the like. Of these compounds, orthoboric acid (merely referred to as "boric acid") is preferred. A content of the boron compound in the porous pellets of an EVOH of the present invention is, in light of thermal stability and moldability, preferably 10 to 2,000 ppm, and more preferably 50 to 1,000 ppm in terms of boron element equivalent.

Due to the alkali metal salt being contained, interlayer adhesiveness and/or compatibility can be effectively improved. A content of the alkali metal salt in the porous pellets of an EVOH of the present invention is preferably 5 to 5,000 ppm in terms of alkali metal element equivalent. The content of the alkali metal salt is more preferably 20 to 1,000 ppm, and still more preferably 30 to 750 ppm. Examples of the alkali metal include lithium, sodium, potassium, and the like. The alkali metal salt is exemplified by aliphatic carboxylic acid salts, aromatic carboxylic acid salts, phosphoric acid salts, metal complexes, and the like. Examples of the alkali metal salt include sodium acetate, potassium acetate, sodium propionate, sodium phosphate, lithium phosphate, sodium stearate, potassium stearate, a sodium salt of ethylenediaminetetraacetic acid, and the like. Of these, sodium acetate, potassium acetate, sodium propionate, and sodium phosphate are preferable.

Although coloring resistance may be somewhat deteriorated in some cases owing to the alkaline earth metal salt being contained, an amount of adhesion of the resin, having been thermally deteriorated during melt molding, to a die of a molding machine can be decreased. The alkaline earth metal salt is not particularly limited and is exemplified by a magnesium salt, a calcium salt, a barium salt, a beryllium salt, and the like, and in particular, a magnesium salt and a calcium salt are preferable. Also, an anion species of the alkaline earth metal salt is not particularly limited; however, aliphatic carboxylate anion and phosphorate anion are preferable. Of these, magnesium acetate, calcium acetate, magnesium propionate, calcium propionate, magnesium phosphate, and calcium phosphate are preferable. A content of the alkaline earth metal salt in the porous pellets of an EVOH of the present invention is, in light of hue and long-run workability, preferably 10 to 1,000 ppm, and more preferably 20 to 500 ppm, in terms of alkaline earth metal element equivalent.

The porous pellets of an EVOH of the present invention may contain, within a range not inhibiting the effects of the present invention, other additive(s) aside from the EVOH, water, the carboxylic acid, the boron compound, the phosphoric acid compound, the alkali metal salt, and the alkaline earth metal salt. The other additives are exemplified by an antiblocking agent, a processing aid, a stabilizer, an antioxidant, a ultraviolet ray-absorbing agent, a plasticizer, an antistatic agent, a lubricant, a colorant, a filler, a surfactant, a drying agent, an oxygen-absorbing agent, a crosslinking agent, a reinforcing agent such as various types of fibers, and the like.

The porous pellets of an EVOH may be used either alone, or in a combination of two or more types thereof. Furthermore, the porous pellets of an EVOH may be constituted from one type of the EVOH, or may be constituted from two or more types of the EVOH.

Of total resin components constituting the porous pellets of an EVOH of the present invention, a proportion from which the EVOH is occupied is, for example, more than 50% by mass, preferably 80% by mass or more, more preferably 90% by mass or more, still more preferably 95% by mass or more, and even more preferably 99% by mass or more, and the entire resin component constituting the porous pellets of an EVOH particularly preferably consists of the EVOH alone. The proportion of the total resin components constituting the porous pellets of an EVOH falling within the above range results in the effects of the invention tending to be markedly achieved. In addition, a proportion accounted for by the EVOH and water in the porous pellets of the EVOH is preferably 80% by mass or more, more preferably 90% by mass or more, still more preferably 95% by mass or more, and particularly preferably 99% by mass or more. When the proportion accounted for by the EVOH and water in the porous pellets of the EVOH of the present invention falls within the above range, the effects of the invention tend to be further markedly achieved.

### Method for Producing Porous Pellets of EVOH

The method for producing porous pellets of an EVOH of the present invention is described herein below. The method for producing porous pellets of an EVOH of the present invention includes: a first step of introducing into an extruder and melt kneading a water-containing EVOH having a moisture content W1 of 10 to 90% by mass; and a second step of cutting the water-containing EVOH discharged from the extruder to obtain the porous pellets of the EVOH containing water. A temperature of the water-containing EVOH discharged from the extruder is 80 to 100 °C, a proportion (V2/V1 × 100) of a total value (V2) of pore volumes of pores having pore diameters of 0.5 to 100 µm with respect to a total value (V1) of pore volumes of pores having pore diameters of 0.005 to 100 µm, in the porous pellets of the EVOH, is 25 to 40% by volume, and a pore surface area of the porous pellets of the EVOH is 25 to 45 m²/g.

Herein, the water-containing EVOH introduced into the extruder may be referred to as "water-containing EVOH for use in the present invention", and the water-containing EVOH obtained by being discharged from the extruder may be referred to as "water-containing EVOH obtained by the present invention" in some cases.

The water-containing EVOH for use in the present invention contains the EVOH and water. The moisture content W1 of the water-containing EVOH is 10 to 90% by mass. In addition, as described later, the water-containing EVOH may also contain other component(s) such as an alcohol and/or an alkali metal salt.

As the EVOH (hereinafter, may be referred to as "EVOH for use in the present invention" or "the aforementioned EVOH") constituting the water-containing EVOH for use in the present invention, an EVOH similar to the EVOH which constitutes the porous pellets of an EVOH can be preferably used.

As described above, the aforementioned EVOH is typically obtained by saponifying an ethylene-vinyl ester copolymer. Copolymerization of ethylene and a vinyl ester may be any one of solution polymerization, suspension polymerization, emulsion polymerization, and bulk polymerization. Furthermore, either a continuous system or a batchwise system may be employed. One example of polymerization conditions in the solution polymerization is shown below.

A solvent to be used is preferably an alcohol having a boiling point of 100 °C or less, in light of: solubility of the ethylene-vinyl ester copolymer and the EVOH; handling characteristics; capability of efficiently replacing the alcohol with water; and the like. The boiling point of the alcohol to be used is more preferably 80 °C or less, and more preferably 70 °C or less.

Illustrative examples of the alcohol having a boiling point of 100 °C or less include methanol, ethanol, n-propyl alcohol, isopropyl alcohol, t-butyl alcohol, and the like, and methanol is particularly preferred.

Examples of an initiator for use in the polymerization include: azonitrile initiators such as 2,2-azobisisobutyronitrile, 2,2-azobis-(2,4-dimethylvaleronitrile), 2,2-azobis-(4-methoxy-2,4-dimethylvaleronitrile), and 2,2-azobis-(2-cyclopropylpropionitrile); organic peroxide initiators such as isobutyryl peroxide, cumyl peroxyneodecanoate, diisopropyl peroxycarbonate, di-n-propyl peroxydicarbonate, t-butyl peroxyneodecanoate, lauroyl peroxide, benzoyl peroxide, and t-butyl hydroperoxide; and the like.

Examples of the vinyl ester include fatty acid vinyl esters such as vinyl acetate, vinyl propionate, and vinyl pivalate, and vinyl acetate is preferable. In addition, the EVOH may contain, as a copolymerization moiety, a vinylsilane compound at a concentration of 0.0002 to 0.2 mol%. In this respect, examples of the vinylsilane compound include vinyltrimethoxysilane, vinyltriethoxysilane, vinyltri(β-methoxy-ethoxy)silane, γ-methacryloxypropylmethoxysilane, and the like. Of these, vinyltrimethoxysilane or vinyltriethoxysilane may be preferably used.

Polymerization conditions are preferably as in the following.
(1) temperature: preferably 20 to 90 °C, more preferably 40 °C to 70 °C.
(2) time period (average residence time in the case of a continuous system): preferably 2 to 15 hrs, more preferably 3 to 11 hrs.
(3) conversion (rate of polymerization): with respect to the vinyl ester charged, preferably 10 to 90%, more preferably 30 to 80%.
(4) a resin part in the solution after polymerization: preferably 5 to 85% by mass, more preferably 20 to 70% by mass.

It is to be noted that ethylene and the vinyl ester can also be polymerized together with a coexisting monomer which can be copolymerized therewith.

After the conversion reaches a certain level by permitting the polymerization for a certain time period, a polymerization inhibitor is added as needed and unreacted ethylene gas is eliminated by evaporation. Thereafter, unreacted vinyl ester is removed. In a procedure which may be adopted for removing off the unreacted vinyl ester, for example, a polymerization solution from which ethylene has been eliminated is continuously fed at a constant rate from above a tower packed with Raschig rings, while a vapor of an organic solvent, preferably an alcohol having a boiling point of 100 °C or less and optimally methanol, is blown into the lower part of the tower, and a mixed vapor of this organic solvent and the vinyl ester unreacted is distilled off from the top of the tower, whereby the copolymer solution from which the unreacted vinyl ester was eliminated is recovered from the bottom part of the tower.

An alkali catalyst is added to the copolymer solution from which the unreacted vinyl ester was eliminated, and a vinyl ester moiety in the copolymer is saponified. The saponification process can be executed by either a continuous system or a batchwise system. Examples of the alkali catalyst which may be used include sodium hydroxide, potassium hydroxide, alkali metal alcoholate, and the like. Further, the solvent for use in the saponification is preferably methanol. For example, saponification conditions are as in the following.
(1) concentration of the ethylene-vinyl ester copolymer in the solution: 10 to 50% by mass
(2) reaction temperature: 30 to 150 °C
(3) amount of the catalyst to be used: 0.005 to 0.6 equivalent (per vinyl ester moiety)
(4) time period (average residence time in the case of a continuous system): 10 min to 6 hrs

Generally, in the case of the saponification in a continuous system, obtaining a resin having a higher degree of saponification is enabled even with a smaller amount of the catalyst, in comparison with the case of a batchwise system, since methyl acetate generated by saponification can be more efficiently removed. Furthermore, in the case of the continuous system, saponification at a higher temperature is necessary in order to prevent precipitation of the EVOH generated by saponification. Therefore, in the continuous system, the reaction temperature and the catalyst amount preferably fall within the following ranges.
reaction temperature: 70 to 150 °C.
amount of the catalyst to be used: 0.005 to 0.1 equivalent (per vinyl ester moiety).

Although the degree of saponification of the EVOH to be obtained may vary depending on the purpose, in light of more improving the gas barrier properties, the degree of saponification in the vinyl ester moiety is preferably 80 mol% or more, more preferably 95 mol% or more, still more preferably 98 mol% or more, and particularly preferably 99 mol% or more. The degree of saponification can be adjusted ad libitum, by way of the conditions.

In a case of producing the pellets of an EVOH being favorable in long-run workability and being particularly superior in melt stability, the degree of saponification of the EVOH is preferably 99.7 mol% or more, more preferably 99.8 mol% or more, still more preferably 99.9 mol% or more, and particularly preferably 99.95 mol% or more. In order to obtain such an EVOH, adjusting the saponification conditions as in the following is preferred.

In a process for obtaining the EVOH having a high degree of saponification, in which the degree of saponification is 99.9 mol% or more, the continuous system is preferably employed. A procedure for giving a high degree of saponification by a continuous system is exemplified by: a procedure of adding the catalyst from a plurality of sites of a saponification reaction tower; a procedure of increasing the amount of the catalyst to be used; a procedure of increasing the amount of methanol blown from the lower part of the saponification reaction tower; and the like. Furthermore, a procedure for obtaining by the batchwise system, the EVOH having a high degree of saponification in which the degree of saponification is 99.9 mol% or more is exemplified by: a procedure of adding the catalyst by dividing into multiple times of addition; a procedure of increasing the amount of the catalyst to be used; a procedure of increasing the amount of a methanol vapor or nitrogen gas blown into the saponification reaction tank; and the like.

A solution or paste containing the EVOH is obtained by the step of saponifying. Since the EVOH yielded after completing the saponification reaction contains the alkali catalyst, byproduct salts such as sodium acetate and potassium acetate, and other impurities, these may be eliminated by neutralizing and washing as needed. In this case, when the EVOH after completing the saponification reaction is washed with ion exchanged water or the like, which is almost free from metal ions, chloride ions and the like, retaining a part of catalyst residues such as sodium acetate and potassium acetate in the EVOH may be acceptable.

In a post-treatment method for the solution or paste of the EVOH after this saponification reaction, it is preferable that the mixed vapor of the solvent and water is fed from the lower part of a container in a tower type vessel, and the solution or paste of the EVOH is fed from a position above the feed position of the mixed vapor, whereby a part of the solvent present in the fed solution or paste of the EVOH is replaced with water to give a high-concentration EVOH solution. The concentration of EVOH in the EVOH solution fed to the tower type vessel is preferably 15 to 50% by mass, and more preferably 25 to 40% by mass. In addition, it is also preferable that a ratio (solution feeding amount / vapor feeding amount) of the feeding amount of the EVOH solution to the feeding amount of the mixed steam is 100/400 to 100/8 in terms of mass ratio. Furthermore, a content of water in the mixed vapor is preferably 20 to 70% by mass. The solvent used for the mixed vapor is preferably an alcohol having a boiling point of 130 °C or less, and examples of such an alcohol include alcohols such as methanol, ethanol, propanol, and butanol. An alcohol having a boiling point of 100 °C or less is more preferred, and in particular, methanol is preferred because it is easily available, inexpensive, has a low boiling point, and is easy to handle.

The solution or paste of the EVOH thus obtained contains an alcohol having a boiling point of 100 °C or less with respect to 100 parts by mass of the EVOH at, typically, a content of 50 parts by mass or more. Furthermore, the content of alcohols is preferably 1,000 parts by mass or less, and more preferably 500 parts by mass or less. When the content of the alcohols falls within this range, fluidity of the EVOH solution can be secured and resin production with favorable efficiency is enabled. The alcohol is preferably methanol. It is to be noted that the EVOH solution after the saponification may be not only the alcohol solution but a solution of mixed solvents containing another solvent such as water added as needed, to an extent in which the EVOH is not deposited.

An exemplary method for obtaining the water-containing EVOH which may be used in the present invention preferably includes: introducing into a vessel, the EVOH solution, which was obtained as described above and contains an alcohol having a boiling point of 100 °C or less in an amount of 50 parts by mass or more with respect to 100 parts by mass of the EVOH; bringing the EVOH solution into contact with water vapor in the vessel to let out the alcohol together with water vapor; letting the water-containing EVOH out from the vessel; and introducing to an extruder described later, the water-containing EVOH let out from the vessel. According to such a method, the alcohol in the aforementioned EVOH solution can be efficiently replaced with water and adjustment of the moisture content of the EVOH is facilitated.

A procedure for bringing the EVOH solution, which was introduced into the vessel, into contact with water vapor in the vessel is not particularly limited, and the procedure may be conducted by either a continuous system or a batchwise system. Also, the form of the vessel is not particularly limited, and preferable forms may be: the tower type vessel for the case of the continuous system; and a bath type vessel for the case of the batchwise system. Taking into consideration the production efficiency, the continuous system is industrially preferred. Illustrative examples of the tower type vessel include: tray towers such as a porous plate tower and a bubble cap tower; and packed towers containing a ring type filler, etc., being packed.

In the tower type vessel, it is preferable that water vapor is fed from the lower part of a container, and the solution or paste of the EVOH is fed from a position above the feed position of the water vapor, whereby the solvent (alcohol) being present in the solution or paste of the EVOH fed is let out together with water vapor to let out the water-containing EVOH having a moisture content of 10 to 90% by mass, from the vessel. The amount of the water vapor to be introduced, with respect to the amount of the solution or paste of the EVOH introduced is, in terms of mass ratio, preferably 0.3 to 30 times, more preferably 0.5 to 10 times, and still more preferably 0.7 to 5 times, because too small an amount of the water vapor may result in unsatisfactory elimination efficiency of the solvent (alcohol), whereas too large an amount thereof may bring a disadvantage in terms of the cost. Although the water vapor to be in contact with the solution or paste of the EVOH may contain 10 parts by mass or less of a solvent (alcohol) with respect to 100 parts by mass of the water vapor, it is preferred that the solvent (alcohol) is not contained in the water vapor for efficiently excluding the solvent (alcohol). The water-containing EVOH may contain 0 to 10 parts by mass of the solvent (alcohol) with respect to 100 parts by mass of the EVOH. Further, the water-containing EVOH may also contain saponification catalyst residues, and/or the like.

The alcohol can be reused by recovering as an aqueous alcohol solution, followed by purification as needed. The solution or paste of the EVOH is brought into direct contact with the water vapor in the vessel, whereby the content of the solvent (alcohol) gradually decreases, and the EVOH is in a paste form being swollen during this period, and thus letting out from the vessel is enabled with the fluidity being maintained, without gelation. The EVOH is dissolved in a methanol/water mixed solvent under an ordinary pressure at a temperature of around 60 to 70 °C, for example; however, in the case in which the solvent is water alone, dissolution under an ordinary pressure fails. However, in the presence of, for example, pressurized water vapor at a temperature of 90 °C or more, fluidity can be maintained even in a state of EVOH substantially containing water alone.

A temperature in the vessel is preferably 100 to 150 °C. When the temperature in the vessel is less than 100 °C, fluidity of the water-containing EVOH may be insufficient and thus gelation and/or obstruction may occur in the vessel. This temperature is more preferably 110 °C or more, and still more preferably 120 °C or more. On the other hand, in a case in which the temperature in the vessel is more than 150 °C, the EVOH may deteriorate. More preferably, the temperature is 140 °C or less.

In addition, pressure in the vessel being too low may lead to inferior efficiency of alcohol elimination". The pressure in the vessel is preferably 0.1 MPa or more, more preferably 0.15 MPa or more, and still more preferably 0.2 MPa or more. On the other hand, the pressure in the vessel being too high may result in excessively low melt viscosity of the water-containing EVOH introduced into the extruder described later, due to excessively high moisture content of the water-containing EVOH let out from the vessel. Therefore, the pressure in the vessel is preferably 0.6 MPa or less, more preferably 0.5 MPa or less, and still more preferably 0.4 MPa or less.

After the EVOH solution is brought into contact with water vapor as described above, the water-containing EVOH is let out from the vessel. The water-containing EVOH is preferably used as the water-containing EVOH to be fed into the extruder in the first step.

In the first step, the water-containing EVOH having a moisture content W1 of 10 to 90% by mass is introduced into the extruder and subjected to melt kneading. The form of the water-containing EVOH introduced into the extruder is not particularly limited and is exemplified by paste and the like. As described above, by bringing the EVOH solution into direct contact with the water vapor in the vessel, the water-containing EVOH in a paste form can be obtained. The EVOH is let out from the vessel without being gelated while the fluidity is maintained.

The moisture content W1 in the water-containing EVOH introduced into the extruder is 10 to 90% by mass. In the case in which the moisture content W1 is less than 10% by mass, a small amount of the moisture may be retained in the water-containing EVOH, and thus porous pellets of the EVOH discharged from the extruder and then cut tend to have a pore surface area of less than 25 m²/g. When the pore surface area is less than 25 m²/g, the washing efficiency of saponification residues may be impaired and drying may take a long time period, whereby the production efficiency tends to be impaired. The moisture content W1 is preferably 20% by mass or more, more preferably 30% by mass or more, still more preferably 40% by mass or more, and particularly preferably 45% by mass or more. On the other hand, when the moisture content W1 is more than 90% by mass, the pore surface area tends to be more than 45 m²/g. When the pore surface area is more than 45 m²/g, the pellets during washing at a high temperature tend to be likely to conglutinate with one another. The moisture content W1 is preferably 80% by mass or less, more preferably 70% by mass or less, still more preferably 60% by mass or less, and particularly preferably 55% by mass or less. The moisture content W1 in the water-containing EVOH introduced into the extruder can be determined by a method described in EXAMPLES as described later. The moisture content W1 can be adjusted by, for example, conditions in carrying out a posttreatment of the solution or paste of the EVOH, conditions in obtaining the water-containing EVOH from the solution or paste of the EVOH, and the like.

A temperature of the water-containing EVOH fed into the extruder is not particularly limited, and is preferably 80 to 130 °C. When the temperature is less than 80 °C, the porous pellets of the EVOH discharged from the extruder and then cut tend to be likely to have the pore volume proportion (V2/V1) of less than 25% by volume. When the pore volume proportion (V2/V1) is less than 25% by volume, the washing efficiency of saponification residues may be impaired and drying may take a long time period, whereby the production efficiency tends to be impaired. The temperature is preferably 90 °C or more, and more preferably 95 °C or more. On the other hand, in a case in which the temperature is more than 130 °C, the pore volume proportion (V2/V1) tends to be likely to exceed 40% by volume, and the pore surface area tends to be likely to exceed 45 m²/g. When the pore volume proportion (V2/V1) is more than 40% by volume, or when the pore surface area is more than 45 m²/g, the pellets during washing at a high temperature tend to be likely to conglutinate with one another. The temperature is preferably 125 °C or less, and more preferably 115 °C or less. The temperature of the water-containing EVOH can be adjusted by, for example, conditions in obtaining the water-containing EVOH from the solution or paste of the EVOH, and the like.

In light of conglutination of resultant porous pellets of the EVOH with one another becoming less likely to occur, and because of influences on the pore volume proportion (V2/V1) of the pellets, a content of the alcohol having a boiling point of 100 °C or less in in the water-containing EVOH introduced into the extruder is preferably 5% by mass or less, more preferably 1% by mass or less, and particularly preferably 0.5% by mass or less. When the content of the alcohol is more than 5% by mass, the pore volume proportion (V2/V1) tends to be likely to exceed 40% by volume, and the pore surface area tends to be likely to exceed 45 m²/g. When the pore volume proportion (V2/V1) is more than 40% by volume, or when the pore surface area is more than 45 m²/g, the pellets during washing at a high temperature tend to be likely to conglutinate with one another.

The water-containing EVOH introduced into the extruder may contain, for example, an alkali metal salt falling under residues of the catalyst used in the saponifying step, and the like, at a content of about 0.1 to 5% by mass in terms of metal equivalent, and may further contain byproduct salts, as well as other impurities, and the like. A content of components other than the EVOH, water, and the alcohol having a boiling point of 100 °C or less in the water-containing EVOH fed to the extruder is preferably 10% by mass or less, more preferably 5% by mass or less, still more preferably 3% by mass or less, and particularly preferably 1% by mass or less.

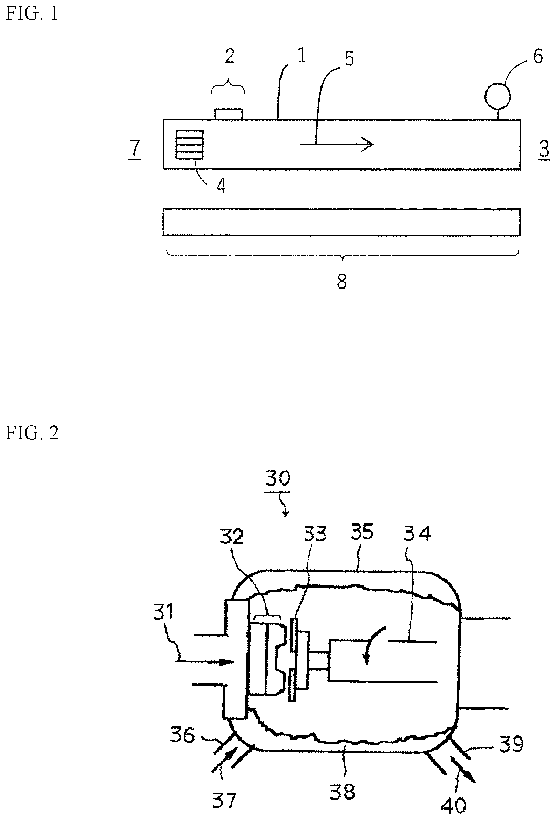

FIG. 1 shows a view illustrating a cylinder structure (upper side of FIG. 1) and a screw structure (lower side of FIG. 1) of the extruder used in Example 1 and the like, as described later. With reference to FIG. 1, the first step is further explained.

The extruder used in the first step may be either a single screw extruder or a multi screw extruder, and a twin-screw extruder is preferred. Furthermore, LID of the extruder is preferably 8 to 30, more preferably 9 to 25, and still more preferably 10 to 20. As the cylinder 1, a block cylinder or the like may be used. The cylinder 1 of the extruder is provided with a feed port 2 of the water-containing EVOH, and after being introduced into the feed port 2, the water-containing EVOH flows toward a tip side (downstream side 3) of the cylinder 1 along the screw of the cylinder 1, by way of rotation of a screw disposed in the cylinder 1. In this process, water in the water-containing EVOH is discharged from a liquid outlet (back slit 4) provided on the cylinder 1, whereby the moisture content of the water-containing EVOH is decreased.

In a planar view of the extruder from a vertical direction with respect to the screw of the cylinder 1, it is preferred that the back slit 4 is provided on an upstream side 7 of the flow 5 of water-containing EVOH than the feed port 2 of the water-containing EVOH, and the feed port 2 does not overlap with the back slit 4, in other words, a part of the undermost stream side 3 of the back slit 4 is disposed further upstream than a part of the uppermost stream side 7 of the feed port 2. It is also preferred that the extruder does not have the liquid outlet further downstream than the feed port 2 of the water-containing EVOH, and it is more preferred that the extruder does not have a liquid outlet other than the back slit 4. In the case in which the extruder does not have a liquid outlet other than the back slit 4, the moisture content W2 in the porous pellets of the EVOH being discharged from the extruder and cut tends to be likely to be adjusted. A type of the back slit 4 used is not particularly limited, and a general deliquoring slit may be used and specifically, a wedge wire type deliquoring slit, a screen mesh type deliquoring slit, or the like may be used.

A cylinder temperature of the extruder is preferably 70 to 100 °C. When the cylinder temperature falls within such a range, the pore surface area of the porous pellets of the EVOH discharged from the extruder and then cut may be adjusted to 25 to 45 m²/g, and the pore volume proportion (V2/V1) tends to be adjusted to 25 to 40% by volume. The temperature is preferably 98 °C or less, and more preferably 95 °C or less. The cylinder temperature as referred to herein means the maximum temperature at a part further on the downstream side than the feed port 2 of the water-containing EVOH.

As the screw of the extruder, a segment type or the like may be used. A rotation speed of the screw is preferably 10 to 2,000 rpm. When the rotation speed of the screw falls within such a range, elution of the EVOH can be further inhibited. The rotation speed of the screw is more preferably 50 rpm or more, still more preferably 120 rpm or more, even more preferably 150 rpm or more, and particularly preferably 200 rpm or more. On the other hand, the screw rotation speed is more preferably 1,500 rpm or less, still more preferably 1,000 rpm or less, even more preferably 800 rpm or less, and particularly preferably 500 rpm or less.

In the second step, the water-containing EVOH discharged from the extruder is cut to give porous pellets of the EVOH containing water (water-containing porous pellets of the EVOH). A moisture content W2 of the porous pellets of the EVOH thus obtained is preferably 5 to 50% by mass. In a case in which the moisture content W2 is less than 5% by mass, a pore surface area of the pellets tends to be likely to be less than 25 m²/g. When the pore surface area is less than 25 m²/g, the washing efficiency of saponification residues may be impaired and drying may take a long time period, whereby the production efficiency tends to be impaired. The moisture content W2 is preferably 10% by mass or more, more preferably 20% by mass or more, and still more preferably 30% by mass or more. On the other hand, when the moisture content W2 is more than 50% by mass, the pore surface area tends to be likely to exceed 45 m²/g. When the pore surface area is more than 45 m²/g, the pellets during washing at a high temperature tend to be likely to conglutinate with one another. The moisture content W2 is preferably 45% by mass or less, and more preferably 40% by mass or less. The moisture content W2 can be determined by a method described in EXAMPLES.

In the present invention, a ratio (W2/W1) of the moisture content W2 of the porous pellets of the EVOH obtained by cutting the water-containing EVOH discharged, to the moisture content W1 in the water-containing EVOH introduced into the extruder is preferably 0.2 or more and less than 1. When the ratio (W2/W1) falls within such a range, the pore volume proportion (V2/V1) of the pellets may be readily adjusted to 25 to 40% by volume. The ratio (W2/W1) is preferably 0.3 or more, more preferably 0.4 or more, still more preferably 0.5 or more, particularly preferably 0.55 or more, and most preferably 0.6 or more. On the other hand, the ratio (W2/W1) is preferably 0.9 or less, more preferably 0.85 or less, still more preferably 0.8 or less, particularly preferably 0.75 or less, and most preferably 0.7 or less. The moisture content W2 can be adjusted by, for example, the moisture content W1, the cylinder temperature, the screw rotation speed, and the like. Furthermore, as described above, by providing the back slit to permit discharging water, the moisture content W2 can be adjusted.

A temperature of the water-containing EVOH discharged from the extruder is 80 to 100 °C. In a case in which the temperature is less than 80 °C, the porous pellets of the EVOH obtained by cutting the water-containing EVOH discharged tend to have the pore surface area of less than 25 m²/g, and tend to have the pore volume proportion (V2/V1) of less than 25% by volume. When the pore surface area is less than 25 m²/g, or when the pore volume proportion (V2/V1) is less than 25% by volume, the washing efficiency of saponification residues may be impaired and drying may take a long time period, whereby the production efficiency tends to be impaired. This temperature is preferably 85 °C or more. On the other hand, in the case in which the temperature is more than 100 °C, the pore surface area tends to be greater than 45 m²/g, and the pore volume proportion (V2/V1) may be greater than 40% by volume. When the pore surface area is more than 45 m²/g, or when the pore volume proportion (V2/V1) is more than 40% by volume, the pellets during washing at a high temperature tend to be likely to conglutinate with one another. The temperature is preferably 98 °C or less, more preferably 95 °C or less, and particularly preferably 93 °C or less. The temperature of the water-containing EVOH discharged from the extruder can be determined by a method described in EXAMPLES.

In light of adjusting the pore volume proportion (V2/V1) of the porous pellets of the EVOH, being obtained by cutting the water-containing EVOH discharged, to be 25 to 40% by volume, a temperature of the water-containing EVOH introduced into the extruder is preferably higher than the temperature of the water-containing EVOH discharged from the extruder. The temperature of the water-containing EVOH introduced into the extruder may be higher than the temperature of the water-containing EVOH discharged from the extruder preferably by 1 °C or more, more preferably by 5 °C or more, and particularly preferably by 10 °C or more.

In the second step, the water-containing EVOH discharged from the extruder is cut to give porous pellets of the EVOH. A procedure for this step is not particularly limited and is exemplified by: a procedure of directly cutting the water-containing EVOH discharged from the extruder (molten state); and a procedure of cutting the water-containing EVOH discharged from the extruder after extrusion into a coagulation liquid to have a strand shape, followed by permitting coagulation, and of these, the procedure of directly cutting the water-containing EVOH is preferred. For the procedure of directly cutting the water-containing EVOH discharged from the extruder, hot cutting, cutting in water, or the like may be adopted. A procedure of cutting a water-containing EVOH composition disclosed in Patent Document 2, or the like may be employed as a preferable one. In light of ease in handling of the porous pellets of an EVOH, a diameter of a nozzle opening being 2 to 5 mmϕ (ϕ representing the diameter, the same to be applied hereinbelow) is preferable. With regard to the size of the porous pellets of the EVOH to be produced, for example, the diameter may be 1 mm or more and 10 mm or less in the case of being spherical (or nearly spherical), and the diameter may be 1 mm or more and 10 mm or less and the length may be 1 mm or more and 10 mm or less in the case of being columnar. It is to be noted that columnar pellets can be obtained in the case of cutting after extrusion to have a strand shape, followed by permitting coagulation, and spherical (or nearly spherical) pellets can be obtained in the case of direct cutting in a molten state. The procedure of cutting the water-containing EVOH in a molten state in this manner is superior in productivity since there is no need for taking into consideration a draw speed for stably forming the strand, as compared with the procedure of cutting after extrusion in the coagulation liquid to have a strand shape, followed by permitting coagulation. For example, even in a case in which strand formation would not be easy, as with an EVOH having a low ethylene content, production of the porous pellets of the EVOH is facilitated by cutting in a molten state.

The water-containing EVOH discharged from the extruder is cut by hot cutting, cutting in water, or the like, and the pellets immediately after the cutting are cooled with cooling water. The cooling water may contain a small amount of an alcohol.

In light of adjusting the median diameter of pores of the porous pellets of the EVOH obtained by cutting the water-containing EVOH discharged, a temperature of the cooling water is preferably 0 to 40 °C. The temperature of the cooling water is preferably 0 to 30 °C, more preferably 0 to 15 °C, and most preferably 0 to 9 °C. In a case in which the temperature of the cooling water is more than 40 °C, the median diameter of pores tends to be more than 0.13 µm. In a case in which the median diameter of pores is 0.13 µm or less, production efficiency tends to be improved, since conglutination of pellets with one another during washing at a high temperature is particularly less likely to occur. When the temperature of the cooling water is less than 0 °C, freezing may lead to failure in circulation.

The porous pellets of the EVOH thus obtained contain the alkali metal salt which is a residue of the catalyst used in the saponification, and in a case of containing in a large amount, quality problems such as coloring may occur; therefore, washing and removing are preferably performed. A washing procedure is not particularly limited and is exemplified by a procedure of immersing in and washing with water or an aqueous solution of an acid such as acetic acid.

A washing temperature which may be adopted falls within a range of 0 to 95 °C. In light of improvement of the washing efficiency, a higher washing temperature is preferred; however, an excessively high temperature is not preferred since conglutination of the pellets may occur with one another. The lower limit value of the washing temperature is preferably 20 °C or more, more preferably 30 °C or more, and optimally 40 °C or more. Although conventional washing temperatures are around 25 to 30 °C in general, the washing temperature of the porous pellets of an EVOH of the present invention can be further elevated, whereby the washing efficiency may be further improved. In addition, the upper limit value of the washing temperature is preferably 80 °C or less, and more preferably 70 °C or less. A content of the alkali metal salt after the washing, with respect to 100 parts by mass of the EVOH in terms of metal element equivalent is preferably 0.05 parts by mass or less, and more preferably 0.03 parts by mass or less. A decrease in the content of the alkali metal salt by the washing can be verified by an electric conductivity value of the washing liquid to be lowered when being washed with ion exchanged water. The electric conductivity of the washing liquid becoming 3 µS/cm or less is preferred.

The porous pellets of the EVOH thus obtained are typically subjected to a drying step. A moisture content of a pelletized EVOH resin composition obtained by drying the porous pellets of the EVOH is generally 1% by mass or less, and preferably 0.5% by mass or less. It is to be noted that the pelletized EVOH resin composition also includes pellets substantially consisting of an EVOH. One characteristic feature of the porous pellets of an EVOH of the present invention is a high drying rate. Therefore, a drying time period can be shortened than conventional methods in this case, leading to an advantage in terms of cost as well. Such a drying procedure is not particularly limited, and preferable procedures are exemplified by a stand-still drying procedure, a fluidization drying procedure, and the like. Alternatively, adopting a drying step including multiple steps of some drying procedures in a combination is also possible, and a procedure including: first drying by the fluidization drying procedure; and subsequently drying by the stand-still drying procedure, or the like may be employed. When the porous pellets of an EVOH of the present invention are to be dried, there may be a case in which executing efficient drying by only one drying procedure is possible, also in cases of efficient drying becoming successful unless a plurality of conventional drying procedures are combined, and thus one significant advantage is that not only shortening of the drying time period, but also a great degree of freedom in adopting a drying process is enabled.

A melt flow rate (MFR) (190 °C, load: 2,160 g) of the pelletized EVOH resin composition obtained from the porous pellets of the EVOH is preferably 0.5 to 100 g/10 min, more preferably 1 to 50 g/10 min, and still more preferably 1.5 to 20 g/10 min. When the MFR is 0.5 g/10 min or more, moldability tends to be favorable, whereas when the MFR is 100 g/10 min or less, a resultant molded product tends to have favorable mechanical characteristics. The MFR can be determined by a method described in EXAMPLES as described later.

The pelletized EVOH resin composition thus obtained is molded into various types of molded products such as films, sheets, vessels, pipes, and fibers by melt molding, and/or may be used for a variety of intended usages. According to the production method of the present invention, productivity of such a pelletized EVOH resin composition can be improved.

### EXAMPLES

Hereinafter, the present invention is specifically described by way of Examples and the like, but the present invention is not limited to these Examples.

### Evaluation Methods

### (1) Measurement of pore volume proportion (V2/V1), pore surface area, and median diameter of pores

Porous pellets of an EVOH obtained in Examples and Comparative Examples were frozen at -80 °C and then were freeze-dried, and the temperature was equilibrated to a normal temperature, whereby a sample material for pore measurement was obtained. About 0.5 g of each sample material for measurement was put into a standard 5 cc cell for powder (stem volume: 0.4 cc), and pore distribution was measured using a micromeritics pore distribution measurement apparatus (AutoPore V9620, manufactured by Shimadzu Corporation) under a condition involving an initial pressure of 2.6 kPa. Mercury parameters were set to a mercury contact angle of 130 degrees, and a mercury surface tension of 485 dynes/cm. Values of the pore surface area and the median diameter of pores were calculated for pores having pore diameters of 0.005 to 100 µm. The pore volume proportion (V2/V1) was calculated from a total value (V1) of pore volumes of pores having pore diameters of 0.005 to 100 µm, and a total value (V2) of pore volumes of pores having pore diameters of 0.5 to 100 µm.

### (2) Measurement of Average Particle Diameter

On 100 g of the sample material for pore measurement produced in the above Evaluation Method (1), the average particle diameter of the sample material for measurement (freeze-dried porous pellets of the EVOH) was measured by using "CAMSIZER XT", manufactured by Verder Scientific Co., Ltd. A particle diameter (Q3 50.0%), at which a cumulative particle distribution of a circle-equivalent particle diameter from a small particle diameter side was 50% (volume basis), was adopted as the average particle diameter, the circle-equivalent particle diameter being calculated by a dynamic image analysis method in accordance with ISO 13322-2 (2006).

### (3) Washing Test at High Temperature

The porous pellets of the EVOH obtained in Examples and Comparative Examples, in an amount of 3 kg, were subjected to an operation, performed twice, including washing with stirring in ion exchanged water (bath ratio: 20) at 50 °C for 1 hour, followed by deliquoring, and then conglutination of the porous pellets of the EVOH was evaluated according to the following criteria.
A: Conglutination among the pellets was not found.
B: Loose conglutination among the pellets was found (10% or fewer of the pellets being conglutinated).
C: Conglutination among the pellets was found (10% or more and 50% or fewer of the pellets being conglutinated).
D: Intense conglutination among the pellets was found (more than 50% of the pellets being conglutinated).

### (4) Test on Number of Times of Washing

The porous pellets of the EVOH after the above Evaluation Method (3) "Washing Test at High Temperature" were subjected to an operation, performed twice, including charging into a 1 g/L aqueous acetic acid solution (bath ratio: 20) and washing with stirring at 25 °C for 2 hrs, followed by deliquoring. The porous pellets of the EVOH after washing with the aqueous acetic acid solution were subjected to an operation including charging into ion exchanged water (bath ratio: 20), and washing with stirring at 25 °C for 2 hrs, followed by deliquoring. Until an electric conductivity of the liquid after washing with ion exchanged water reached 3 µS/cm or less, such an operation of washing with ion exchanged water and deliquoring was repeated, and the number of times of repetition was recorded. The electric conductivity was measured with "CM-30ET", manufactured by Toa Electronics Ltd.

### (5) Measurement of Moisture Content

By using each 3 g of the water-containing EVOHs, the porous pellets of the EVOH, and the dry pelletized EVOH resin compositions used or obtained in each of Examples and Comparative Examples, the moisture content (W1) of the water-containing EVOH, the moisture content (W2) of the porous pellets of the EVOH, and the moisture content of the dry pelletized EVOH resin composition were measured under conditions involving a drying temperature of 180 °C and a drying time period of 15 min with "HR73", a halogen moisture analyzer manufactured by Mettler Toledo.

### (6) Measurement of Percentage Content of Alcohol

Each 5 g of the water-containing EVOHs used in Examples and Comparative Examples was freeze-ground in liquid nitrogen and a sample (about 500 mg) was taken into a vial for HSS immediately after the grinding, and an analysis of methanol was performed under the following conditions. The measurement was conducted twice for each sample, and the percentage content of alcohol was calculated from an average thereof.
· Head space (HSS)-GC/MS
   oven temperature: 120 °C (MHE method: [120 °C × 30 min] × 5 times)
   loop temperature: 200 °C
   transfer temperature: 200 °C, with shaking
GC/MS
   column: DB-WAXetr (30 m - 0.25 mm - 0.5 µm)
   oven: 50 °C (maintained for 5 min) → 10 °C/min → 200 °C (maintained for 10 min)
   injection port: 230 °C (split ratio 20: 1)
   mode of measurement: SIM (m/z = 31)

### (7) Measurement of Melt Flow Rate (MFR)

With regard to the dry pelletized EVOH resin compositions obtained in Examples and Comparative Examples, MFR was measured in accordance with a method disclosed in JIS K 7210: 2014. Specifically, after the dry pelletized EVOH resin composition was packed into a cylinder having an inside diameter of 9.55 mm and a length of 162 mm of a melt-indexer L244 (manufactured by Takara Industries Co., Ltd) and melted at 210 °C, a load was evenly applied to the molten resin composition by using a plunger having a mass of 2,160 g and a diameter of 9.48 mm. A resin composition amount (g/10 min) extruded per unit time period from an orifice having a diameter of 2.1 mm provided at a center of the cylinder was measured.

### (8) Quantitative Determination of Sodium Ion, Phosphoric Acid, and Boric Acid

Each 0.5 g of the dry pelletized EVOH resin compositions obtained in Examples and Comparative Examples was placed into a Teflon (registered trademark) pressure vessel and thereto, 5 mL of concentrated nitric acid was added and decomposition was permitted at room temperature for 30 min. Thirty minutes later, a lid was attached and decomposition was allowed by heating using a wet decomposition system ("MWS-2" manufactured by Actac Project Services Corporation) at 150 °C for 10 min and then at 180 °C for 5 min, followed by cooling to room temperature. This treatment liquid was transferred to a 50 mL volumetric flask (made of TPX (registered trademark)) and diluted with pure water until the volumetric flask was full. This solution was subjected to analyses on metals contained therein with an ICP emission spectrometer ("OPTIMA 4300 DV" manufactured by PerkinElmer, Inc.) to calculate the amount of sodium ion (sodium element), the amount of phosphoric acid in terms of phosphate radical, and the amount of boric acid in terms of boron. It is to be noted that in each quantitative determination, a calibration curve created using a commercially available standard solution was used.

### (9) Measurement of Acetic Acid Content

Each 20 g of the dry EVOH resin composition pellets obtained in Examples and Comparative Examples was charged into 100 mL of ion exchanged water, and extracted under heating at 95 °C. for 6 hrs. The extract liquid was subjected to neutralization titration with 1/50 N NaOH using phenolphthalein as an indicator, whereby the content of acetic acid was quantitatively determined.

### Example 1

An EVOH solution containing: 100 parts by mass of an EVOH having an ethylene unit content of 32 mol% and a degree of saponification of 99.98 mol%; 60 parts by mass of methanol; and 40 parts by mass of water was continuously fed from a top plate of a plate tower having a tower diameter of 0.3 m and 10 plates, and water vapor was blown from a bottom plate thereof, thereby bringing the EVOH solution and the water vapor into contact by a countercurrent flow. A temperature in the tower was 130 °C and a temperature in the tower was 0.3 MPa. Water-containing EVOH pellets obtained by allowing the contact with the water vapor by the countercurrent flow were ejected from a tower bottom. The temperature of the water-containing EVOH obtained was 120 °C, and the moisture content (W1) measured in accordance with the above Evaluation Method (5) was 52.4% by mass. In addition, the percentage content of alcohol measured in accordance with the above Evaluation Method (6) was 0.02% by mass. The results are shown in Table 1.

The temperature of the water-containing EVOH thus obtained, having the moisture content (W1) of 52.4% by mass was adjusted to 110 °C, and the water-containing EVOH was fed at 42 kg/hr, into a twin-screw extruder shown in FIG. 1 having the back slit 4 provided further on the upstream side 7 than the feed port 2 and then extruded from a die which was installed on a tip of the extruder and had 8 pores each having a pore diameter of 30 mm, and a melted product thereof was, when at a distance of 0.05 mm from the die, cut with a hot cutter (FIG. 2) having two blades to give porous pellets of the EVOH having a flat spherical shape. Circulating water in the cutter had a flow rate of 300 liter/min, circulating water (cooling water) had a temperature of 5 °C, and the rotation speed of the cutter blade was 3,000 rpm. At this time point, the resin temperature (outlet) was 95 °C, and the moisture content (W2) measured in accordance with the above Evaluation Method (5) was 35.5% by mass. It is to be noted that the resin temperature (outlet) was measured by a temperature sensor which comes in contact with the melt, having been provided in the vicinity of the discharge outlet at a cylinder tip. A part of these extrusion conditions and results of the measurements are shown in Table 1. In addition, with regard to the porous pellets of the EVOH obtained, the pore volume proportion, the pore surface area, the median diameter of pores, and the average particle diameter were measured in accordance with each procedure described in the above Evaluation Methods (1) and (2). The results are shown in Table 1. It is to be noted that the pore volume (V1) was 0.289 ml/g.
Conditions of Twin-Screw Extruder
L/D: 14
opening diameter: 30 mm
screw: full-flight
rotation speed: 300 rpm
cylinder temperature: 90 °C (maximum temperature at a part further on the downstream side than the feed port 2 of the water-containing EVOH)
die temperature: 120 °C
number of die holes: 8

In accordance with each procedure described in the above Evaluation Methods (3) and (4), the washing test at a high temperature and the test on number of washing times were performed, and porous pellets of the EVOH after washing were obtained. The porous pellets of the EVOH after washing thus obtained were charged into an aqueous solution (bath ratio: 20) having a sodium acetate concentration of 0.510 g/L, an acetic acid concentration of 0.8 g/L, and a phosphoric acid concentration of 0.04 g/L, and a chemical treatment was conducted while regularly stirring the mixture. The pellets were deliquored and then dried under a nitrogen stream having an oxygen concentration of 1% by volume or less at 95 °C for 3 hrs, whereby a dry pelletized EVOH resin composition having a moisture content of 0.5% by mass was obtained. With regard to the dry pelletized EVOH resin composition thus obtained, in accordance with each procedure described in the above Evaluation Methods (5), and (7) to (9), the dry pelletized EVOH resin composition was evaluated on the moisture content (moisture content after drying for 3 hrs), the MFR (MFR after drying), the sodium ion amount, the phosphoric acid amount, and the acetic acid amount,. The sodium ion amount was 100 ppm, the amount of phosphoric acid in terms of phosphate radical was 40 ppm, and the content of acetic acid was 200 ppm. Other results are shown in Table 1.

### Examples 2 to 10, Comparative Example 1

Porous pellets of the EVOH and dry pelletized EVOH resin composition were produced and evaluated by a similar procedure to that of Example 1, except for the conditions being changed such that the ethylene unit content, the percentage content of alcohol, the temperature and the moisture content W 1 of the resin fed into the extruder, the cylinder temperature, the temperature of the resin extruded from the extruder, and the circulating water (cooling water) temperature were as shown in Table 1. The results are shown in Table 1. It is to be noted that, in all of the Examples and the Comparative Examples, the sodium ion amount was 100 ppm, the amount of phosphoric acid in terms of phosphate radical was 40 ppm, and the content of acetic acid was 200 ppm. In addition, the pore volume (V1) of Comparative Example 1 was 0.418 ml/g.

### Example 11

A dry pelletized EVOH resin composition of Example 11 was obtained in a similar manner to Example 9 except for the aqueous solution used in the chemical treatment being changed to an aqueous solution (bath ratio: 20) having a sodium acetate concentration of 0.510 g/L, an acetic acid concentration of 0.8 g/L, a phosphoric acid concentration of 0.04 g/L, and a boric acid concentration of 0.57 g/L. With regard to the dry pelletized EVOH resin composition thus obtained, in accordance with each procedure described in the above Evaluation Methods (5), and (7) to (9), the dry pelletized resin composition was evaluated on the moisture content, the MFR, the sodium ion amount, the phosphoric acid amount, and the boric acid and acetic acid amounts. The sodium ion amount was 100 ppm, the amount of phosphoric acid in terms of phosphate radical was 40 ppm, the content of acetic acid was 200 ppm, and the amount in terms of boron was 800 ppm. Other results are shown in Table 1.

### Comparative Example 2

An EVOH solution at 60 °C containing: 100 parts by mass of an EVOH having an ethylene unit content of 32 mol% and a degree of saponification of 99.98 mol%; 60 parts by mass of methanol; and 40 parts by mass of water was extruded in a strand shape from a metal plate having a circular opening portion with a diameter of 3.5 mm into a mixed solution of water and ethanol maintained at 2 °C (mass ratio: water/methanol = 9/1) to permit depositing and coagulation, and then cut with a cutter to give a porous EVOH in a pellet shape (columnar; diameter: 4 mm; length: 4 mm). Further, the EVOH was charged into cold water at 10 °C and stirred for about 4 hrs to give porous pellets of the EVOH. With regard to the porous pellets of the EVOH thus obtained, the pore volume proportion (V2/V1), the pore surface area, the median diameter of pores, the average particle diameter, and the moisture content were measured in accordance with each procedure described in the above Evaluation Methods (1), (2) and (5). The results are shown in Table 1. It is to be noted that the pore volume (V1) was 0.485 ml/g.

Next, in accordance with the procedure described in the above Evaluation Method (3), the washing test at a high temperature was performed. As a result of the washing test at a high temperature being performed, D: intense conglutination was found among the pellets. After the conglutinated pellets were removed, the test on the number of times of washing was performed in accordance with the procedure described in (4) to give porous pellets of the EVOH after washing. The porous pellets of the EVOH after washing thus obtained were charged into an aqueous solution (bath ratio: 20) having a sodium acetate concentration of 0.510 g/L, an acetic acid concentration of 0.8 g/L, and a phosphoric acid concentration of 0.04 g/L, and a chemical treatment was conducted while regularly stirring the mixture. The pellets were deliquored and dried under a nitrogen stream having an oxygen concentration of 1% by volume or less at 95 °C for 3 hrs to give pellets having a moisture content of 25% by mass. Since the drying was insufficient, thus obtained pellets were further dried under a nitrogen stream having an oxygen concentration of 1% by volume or less at 125 °C for 18 hrs to give a dry pelletized EVOH resin composition having a moisture content of 0.3%. In accordance with each procedure described in the above Evaluation Methods (5), and (7) to (9), the dry pelletized EVOH resin composition was evaluated on the moisture content, the MFR, the sodium ion amount, the phosphoric acid amount, and the acetic acid amount. The sodium ion amount was 100 ppm, the amount of phosphoric acid in terms of phosphate radical was 40 ppm, and the content of acetic acid was 200 ppm. Other results are shown in Table 1.

### Comparative Example 3

An EVOH solution at 60 °C containing: 100 parts by mass of an EVOH having an ethylene unit content of 32 mol% and a degree of saponification of 99.98 mol%; 60 parts by mass of methanol; and 40 parts by mass of water was extruded in a strand shape from a metal plate having a circular opening portion with a diameter of 3.5 mm into a mixed solution of water and ethanol maintained at 5 °C (mass ratio: water/methanol = 9/1) to permit depositing and coagulation, and then cut with a cutter to give EVOH pellets. The EVOH pellets thus obtained were charged into warm water at 30 °C and stirred for 4 hrs to give porous EVOH in a pellet shape. Further, the EVOH was charged into warm water at 30 °C and the mixture was stirred for about 4 hrs to give porous pellets of the EVOH. With regard to the porous pellets of the EVOH thus obtained, the pore volume proportion (V2/V1), the pore surface area, the median diameter of pores, the average particle diameter, and the moisture content were measured in accordance with each procedure described in the above Evaluation Methods (1), (2) and (5). The results are shown in Table 1.

Next, in accordance with the procedure described in the above Evaluation Method (3), the washing test at a high temperature was performed. As a result of the washing test at a high temperature being performed, C: conglutination was found among the pellets. After the conglutinated pellets were removed, the test on the number of times of washing was performed in accordance with the procedure described in (4) to give porous pellets of the EVOH after washing. The porous pellets of the EVOH after washing thus obtained were charged into an aqueous solution (bath ratio: 20) having a sodium acetate concentration of 0.510 g/L, an acetic acid concentration of 0.8 g/L, and a phosphoric acid concentration of 0.04 g/L, and a chemical treatment was conducted while regularly stirring the mixture. The pellets were deliquored and dried under a nitrogen stream having an oxygen concentration of 1% by volume or less at 95 °C for 3 hrs to give pellets having a moisture content of 18% by mass. Since the drying was insufficient, thus obtained pellets were further dried under a nitrogen stream having an oxygen concentration of 1% by volume or less at 125 °C for 18 hrs to give a dry pelletized EVOH resin composition having a moisture content of 0.3%. In accordance with each procedure described in the above Evaluation Methods (5), and (7) to (9), the dry pelletized EVOH resin composition was evaluated on the moisture content, the MFR, the sodium ion amount, the phosphoric acid amount, and the acetic acid amount. The sodium ion amount was 100 ppm, the amount of phosphoric acid in terms of phosphate radical was 40 ppm, and the content of acetic acid was 200 ppm. Other results are shown in Table 1.

### Comparative Example 4

Porous pellets of the EVOH were produced and evaluated by similar procedures to those of Example 1, except for: the conditions being changed such that the ethylene unit content, the percentage content of alcohol, the temperature and the moisture content W 1 of the resin fed into the extruder, the cylinder temperature, and the temperature of the resin extruded from the extruder were as shown in Table 1; and the water-containing EVOH discharged from the twin-screw extruder being extruded into a coagulation liquid consisting of water at 10 °C (cooling water) through four nozzles (diameter: 6 mm), thereby permitting coagulation to have a strand shape, and then cut with a strand cutter into a pellet shape. The results are shown in Table 1.

With regard to the porous pellets of the EVOH thus obtained, in accordance with the procedure described in the above Evaluation Method (3), the washing test at a high temperature was performed. Although conglutination among the pellets was scarcely found by the first washing operation in the washing test at a high temperature, as a result of conducting the second washing operation after deliquoring, C: conglutination was found among the pellets. After the pellets being conglutinated were removed, the test on number of washing times was performed in accordance with the procedure described in the above Evaluation Method (4) to give porous pellets of the EVOH after washing. The porous pellets of the EVOH after washing thus obtained were charged into an aqueous solution (bath ratio: 20) having a sodium acetate concentration of 0.510 g/L, an acetic acid concentration of 0.8 g/L, and a phosphoric acid concentration of 0.04 g/L, and a chemical treatment was conducted while regularly stirring the mixture. The pellets were deliquored and dried under a nitrogen stream having an oxygen concentration of 1% by volume or less at 95 °C for 3 hrs to give a dry pelletized EVOH resin composition having a moisture content of 0.7% by mass. In accordance with each procedure described in the above Evaluation Methods (5), and (7) to (9), evaluations of the moisture content, the MFR, the sodium ion amount, the phosphoric acid amount, and the acetic acid amount were made on the dry pelletized EVOH resin composition. The sodium ion amount was 100 ppm, the amount of phosphoric acid in terms of phosphate radical was 40 ppm, and the content of acetic acid was 200 ppm. Other results are shown in Table 1.

**Table 1**

| | | | Exam ple 1 | Exam ple 2 | Exam ple 3 | Exam ple 4 | Exam ple 5 | Exam ple 6 | Exam ple 7 | Exam ple 8 | Exam ple 9 | Exam ple 10 | Exam ple 11 | Comparative Example 1 | Comparative Example 2 | Comparative Example 3 | Comparative Example 4 |
|---|---|---|---|---|---|---|---|---|---|---|---|---|---|---|---|---|---|
| Water contai ning EVO H | Ethylene unit content | mol% | 32 | 32 | 32 | 32 | 32 | 32 | 32 | 32 | 27 | 44 | 27 | 32 | 32 | 32 | 32 |
| | Degree of saponification | mol% | 99.98 | 99.98 | 99.98 | 99.98 | 99.98 | 99.98 | 99.98 | 99.98 | 99.98 | 99.98 | 99.98 | 99.98 | 99.98 | 99.98 | 99.98 |
| | Moisture content W1 | % by mass | 52.4 | 46.5 | 65.2 | 54.5 | 53.5 | 52.4 | 52.4 | 52.4 | 52.4 | 52.4 | - | 57.4 | - | - | 50.7 |
| | Percentage content of alcohol | % by mass | 0.02 | 0.02 | 0.02 | 0.02 | 0.02 | 1.2 | 0.02 | 0.02 | 0.02 | 0.02 | - | 0.03 | - | - | 0.02 |
| | Resin temperature (introduced) | °C | 110 | 110 | 110 | 100 | 120 | 110 | 110 | 110 | 110 | 110 | - | 135 | - | - | 125 |
| Extru der | Cylinder temperature | °C | 90 | 90 | 90 | 90 | 90 | 90 | 95 | 75 | 90 | 90 | - | 95 | - | - | 95 |
| | Resin temperature (outlet) | °C | 95 | 95 | 95 | 95 | 95 | 95 | 98 | 90 | 95 | 95 | - | 118 | - | - | 118 |
| | Circulating water (cooling water) temperature | °C | 5 | 5 | 4 | 4 | 6 | 7 | 5 | 6 | 3 | 6 | - | 5 | - | - | 10 |
| Porou s pellets | Pore volume proportion (V2/V1) | % by volum e | 38.1 | 37.6 | 38.8 | 29.9 | 39.2 | 39.8 | 39.5 | 33.4 | 34.3 | 33.3 | - | 41.0 | 3.5 | 89.0 | 23.5 |
| | Pore surface area | m²/g | 35.8 | 29.4 | 43.5 | 34.2 | 42.8 | 44.7 | 38.5 | 31.9 | 32.1 | 33.0 | - | 46.7 | 48.2 | 28.4 | 47.2 |
| | Median diameter of pores | µm | 0.110 | 0.102 | 0.121 | 0.062 | 0.136 | 0.172 | 0.115 | 0.079 | 0.110 | 0.070 | - | 0.172 | 0.051 | 3.865 | 0.168 |
| | Average particle diameter | mm | 3.2 | 3.3 | 3.4 | 3.2 | 3.3 | 3.2 | 3.3 | 3.2 | 3.2 | 3.3 | - | 3.5 | 4.1 | 4.2 | 3.5 |
| | Moisture content W2 | % by mass | 35.5 | 26.2 | 42.9 | 32.0 | 35.5 | 35.5 | 32.6 | 36.7 | 39.0 | 34.2 | - | 34.2 | 47.5 | 50.2 | 43.5 |
| | W2/W1 | - | 0.68 | 0.56 | 0.66 | 0.59 | 0.66 | 0.68 | 0.62 | 0.70 | 0.74 | 0.65 | - | 0.60 | - | - | 0.86 |
| Evalu ations | Conglutination in washing liquid at 50 °C | - | A | A | B | A | B | B | B | A | A | A | - | C | D | C | C |
| | Washing with ion exchanged water at 25 °C | - | 3 times | 4 times | 2 times | 4 times | 2 times | 2 times | 2 times | 4 times | 3 times | 3 times | - | 2 times | 6 times | 6 times | 2 times |
| | Moisture content after drying for 3 hrs | % by mass | 0.5 | 0.6 | 0.4 | 0.5 | 0.5 | 0.4 | 0.5 | 0.5 | 0.5 | 0.5 | 0.5 | 0.5 | 25 | 18 | 0.7 |
| | MFR after drying (190 °C; 2,160 g) | g/10 min | 1.6 | 1.6 | 1.6 | 1.6 | 1.6 | 1.6 | 1.6 | 1.6 | 8.0 ¹⁾ | 5.5 | 4.0 ¹⁾ | 1.6 | 1.6 | 1.6 | 1.6 |

As shown in Table 1, the porous pellets of the EVOH of Examples 1 to 11 were each evaluated by the washing test at a high temperature as being A or B, and the number of times in the test on the number of times of washing was 4 times or fewer. These reveal that: washing of the saponification residues can be carried out within a shorter period of time; and the conglutination of the pellets with one another during washing at a high temperature can be inhibited.

Of the Examples, the porous pellets of the EVOH of Examples 1, 3, 5 to 7, and 9 to 11 in which: the pore volume proportion (V2/V1) was 32% by volume or more; and the pore surface area was 32.0 m²/g or more exhibited the number of times in the test on the number of times of washing being 3 times or fewer, revealing that washing within a further shorter period of time was enabled. Moreover, the porous pellets of the EVOH of Examples 1 and 9 to 11 in which: the pore volume proportion (V2/V1) was 38.5% by volume or less; the pore surface area was 32.0 m²/g or more and 41 m²/g or less and the number of times in the test on number of washing times was 3 times or fewer; and the evaluation by the washing test at a high temperature was A, thereby indicating particularly superior effects being achieved.

### [Explanation of the Reference Symbols]

1 cylinder
2 feed port
3 downstream side
4 back slit
5 flow of water-containing EVOH
6 temperature sensor
7 upstream side
8 full-flight screw
30 hot cutter
31 melt-feed port
32 die
33 rotary blade
34 rotation axis
35 cutter box
36 cooling water-feed port
37 cooling water
38 water film
39 pellets outlet
40 cooling water and pellets

## Claims

1. Porous pellets of an ethylene-vinyl alcohol copolymer comprising pores, wherein in the porous pellets,
a proportion (V2/V1 × 100) of a total value (V2) of pore volumes of pores having pore diameters of 0.5 to 100 µm with respect to a total value (V1) of pore volumes of pores having pore diameters of 0.005 to 100 µm is 25 to 40% by volume, and
a pore surface area of pores having pore diameters of 0.005 to 100 µm is 25 to 45 m²/g.

2. The porous pellets of an ethylene-vinyl alcohol copolymer according to claim 1, wherein a median diameter of pores having pore diameters of 0.005 to 100 µm is 0.05 to 0.13 µm.

3. The porous pellets of an ethylene-vinyl alcohol copolymer according to claim 1 or 2, wherein an average particle diameter is 2.5 to 8 mm.

4. The porous pellets of an ethylene-vinyl alcohol copolymer according to any one of claims 1 to 3, further comprising water.

5. The porous pellets of an ethylene-vinyl alcohol copolymer according to claim 4, wherein a moisture content is 5 to 50% by mass.

6. A method for producing porous pellets of an ethylene-vinyl alcohol copolymer, the method comprising:
a first step of introducing into an extruder and melt kneading a water-containing ethylene-vinyl alcohol copolymer having a moisture content W1 of 10 to 90% by mass; and
a second step of cutting the water-containing ethylene-vinyl alcohol copolymer discharged from the extruder to obtain the porous pellets of the ethylene-vinyl alcohol copolymer comprising water, wherein
a temperature of the water-containing ethylene-vinyl alcohol copolymer discharged from the extruder is 80 to 100 °C,
a proportion (V2/V1 × 100) of a total value (V2) of pore volumes of pores having pore diameters of 0.5 to 100 µm with respect to a total value (V1) of pore volumes of pores having pore diameters of 0.005 to 100 µm, in the porous pellets of the ethylene-vinyl alcohol copolymer, is 25 to 40% by volume, and
a pore surface area of the porous pellets of the ethylene-vinyl alcohol copolymer is 25 to 45 m²/g.

7. The method for producing porous pellets of an ethylene-vinyl alcohol copolymer according to claim 6, wherein in the second step, the water-containing ethylene-vinyl alcohol copolymer discharged from the extruder is cut in a molten state.
